# EUROPEAN PATENT SPECIFICATION

(11) **EP 2 843 380 B1**
(45) Date of publication and mention of the grant of the patent: **07.08.2019**
(21) Application number: 13780694.9
(22) Date of filing: 12.03.2013
(51) Int. Cl.: G01G 23/01, G01G 11/12, G01G 3/12, G01G 11/00

(54) **METHOD FOR CHECK WEIGHING OF MATERIAL AND DEVICE THEREOF**
VERFAHREN ZUR KONTROLLE DES WIEGENS EINES MATERIALS UND VORRICHTUNG DAFÜR
PROCÉDÉ POUR LA VÉRIFICATION DE LA PESÉE D'UN MATÉRIAU ET DISPOSITIF ASSOCIÉ

(30) Priority: 25.04.2012 CN 201210124001
(43) Date of publication of application: 04.03.2015
(73) Proprietor: Mesnac. Co. Ltd, Qingdao Shandong 266042 (CN)
(72) Inventor: YU, Xiaoguang, Qingdao Shandong 266042 (CN); ZHAI, Weimin, Qingdao Shandong 266042 (CN); WANG, Duohu, Qingdao Shandong 266042 (CN)
(74) Representative: Intès, Didier Gérard André
(86) International application number: PCT/CN2013/072505
(87) International publication number: WO 2013/159606

(56) References cited:
- WO-A1-98/31993
- WO-A1-03/087736
- CN-U- 202 188 888
- CN-U- 202 676 276
- CN-Y- 2 636 209
- CN-Y- 2 916 593
- JP-A- 2006 090 942
- US-A1- 2010 059 291

## Description

### Field of The Technology

The invention relates to a method for achieving accurate weighing of materials through the physical deformation of a sensing device caused by vertical force. The method is mainly applied in weighing and verifying materials on a large scale with high accuracy, and belongs to the field for transferring rubbery or plastic materials.

### Background of The Invention

At present, checkweigher of carbon-steel structure is available for the production process of material transfer or check weighing of materials, such as being utilized in check weighing of formula of adhesive in manufacturing tires.

The checkweigher of carbon-steel structure is known for short weighing time. However, the accuracy of the checkweigher is comparatively not good due to its heavy self weight and the sensors utilized with large strokes. Moreover, the deformation of the carbon-steel checkweigher may lead to inaccurate weighing and further induce defects in formula of adhesive, and eventually affect the quality of products.

WO 03/087736 A1 discloses a check weighing device according to the preamble of appended claim 4. Further check weighing devices are disclosed in US 2010/059291 A1 and WO 98/31193 A1.

### Summary of The Invention

The invention provides a method for check weighing of materials and a check weighing device thereof with the aim of solving the above-mentioned problems in the prior art. The method is defined in appended claim 1 and the check weighing device is defined in appended claim 4.

The method for check weighing of materials comprises the following steps: exerting a vertical downward force due to gravity on a weighing device; transferring the vertical downward force exerted by materials to the ball-shaped components which are arranged at ends of the suspension mechanism and connected with concave brackets through rigid parts of the weighing device; detecting the deformation of a sensing device caused by the vertical downward force exerted by the suspension mechanism so as to weigh materials; comparing prior weighing readings of materials which have been proportioned with weighing readings of check weighing to accomplish the process of check weighing of materials.

One of the objectives of the invention is to solve the problem of low accuracy in weighing materials due to impacts of external environment for improving accuracy in check weighing materials.

The second objective of the invention is to adjust the way of connecting the sensing device with checkweigher. Hence, the suspension mechanism is utilized to connect the sensing device with the check weighing device. To be specific, the ball-shaped components arranged on the suspension mechanism are adopted to connect with concave brackets arranged at ends of the sensing device in an engaged manner, so as to achieve accurate weighing of materials.

Further, another objective of the invention is to replace the main frame of the weighing device made of carbon-steel material with aluminum material to effectively overcome the shortcoming of low accuracy in weighing caused by the self weight of checkweigher, so as to improve the weighing accuracy of the weighing device.

In order to achieve the above-identified problems, the method for check weighing materials is described as follows:
As being transferred, proportioned materials which have been weighed are driven by the main transmission device to move forward. When the induction device which is at least mounted on one side of the weighing device detects the materials, the main transmission device stops rotating and the materials exert a vertical downward force on the weighing device due to gravity.

Then the vertical downward force exerted by the materials is transferred to the ball-shaped components which are arranged at ends of the suspension mechanism and connected with the concave brackets. The deformation of the sensing device caused by the vertical downward force exerted by the suspension mechanism is detected to weigh materials. Comparing prior weighing readings of materials after being proportioned with weighing readings of check weighing, the process of check weighing of materials is accomplished.

One end of the sensing device is fixedly connected with the truss and the other end of the sensing device is connected with the main frame of the weighing device by the suspension mechanism, so as to lower the impact caused by external environment on the accuracy of the weighing device.

Both ends of the suspension mechanism are respectively fixedly connected with the sensing device and the concave brackets on the weighing device through the ball-shaped components of the suspension mechanism in an engaged manner and the contact area between each ball-shaped component and concave bracket is equal or less than half of the surface area of the ball-shaped component, so as to realize the accurate weighing of materials.

In order to achieve the above-identified objectives of the invention, the check weighing device utilized mainly comprises:
the main transmission device, which comprises a main driven roller and a driving motor which is arranged inside the main driven roller and used for driving convey belts to move in a cyclic manner;
the weighing device, which comprises the main frame made of aluminum for reducing the self weight of the check weighing device and the truss used for bearing vertical pulling forces or stresses caused by loads;
the suspension mechanism, which comprises the ball-shaped components respectively connected with one end of the weighing device and one end of the sensing device, and metal pulling cords connected with the ball-shaped components, which are made of steel wire.

The main transmission device which is used for driving materials to move forward is mounted at a lateral end of the main frame of the weighing device, and the induction device which is used for detecting the position of materials is fixedly arranged on at least one side of the main frame of the weighing device.

One or more groups of the sensing devices are fixedly arranged under the main frame of the weighing device. One end of the sensing device is connected with the main frame of the weighing device through the suspension mechanism. Each concave bracket of the suspension mechanism is vertically inserted into the regulatory wire thread insert and the adjusting device which is used for preventing the metal pulling cords from deviating from orthocenter is vertically connected outside the regulatory wire thread insert in a sleeved manner, so as to ensure the metal pulling cords keeping vertically. The truss of the weighing device is respectively connected with the support legs through U-shaped brackets, so as to ensure accurate check weighing of materials.

As described in the above-mentioned basic technical solution, materials exerts vertical downward force on the weighing device due to gravity, the vertical downward force exerted by the materials is transferred to the ball-shaped components which are arranged at ends of the suspension mechanism and connected with the concave brackets. The deformation of the sensing device caused by the vertical downward force exerted by the suspension mechanism is detected to weigh materials.

In summary, the method for check weighing of materials and the check weighing device thereof has the advantages and positive results in that:
1. Accurate weighing of materials is achieved by adjusting the way of connecting the sensing device with the body of the check weighing device, and namely the suspension mechanism is utilized to connect the sensing device with the check weighing device.
2. The impact of external environment on check weighing of materials is reduced to improve the accuracy of weighing materials.
3. The main frame of the weighing device made of carbon-steel materials is replaced with aluminum material, so as to overcome the shortcoming of low accuracy in weighing caused by its heavy self weight and improve the accuracy in check weighing.

### Brief Description of The Drawings

Taking drawings as reference, detailed description of the invention is presented as follows:
FIG. 1 is the front view of the check weighing device;
FIG. 2 is the side view of the check weighing device;
FIG. 3 is the partial schematic diagram of the check weighing device;
FIG. 4 is the section view of the suspension mechanism.

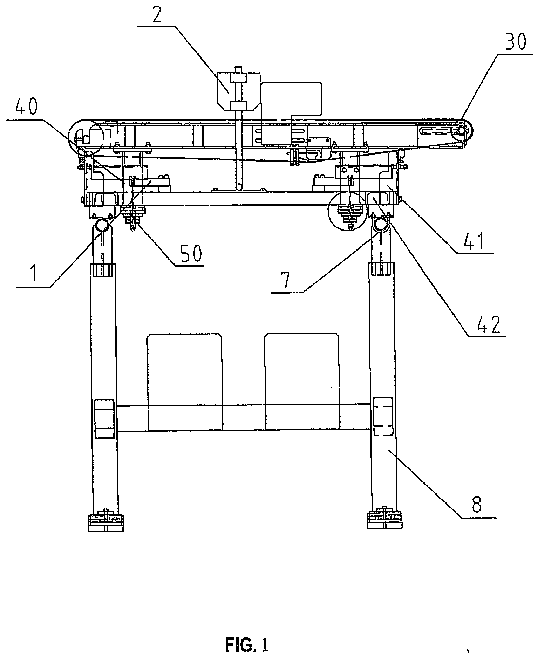

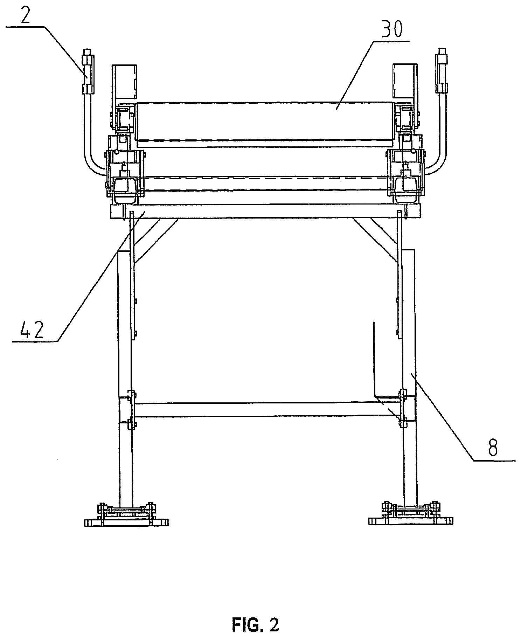

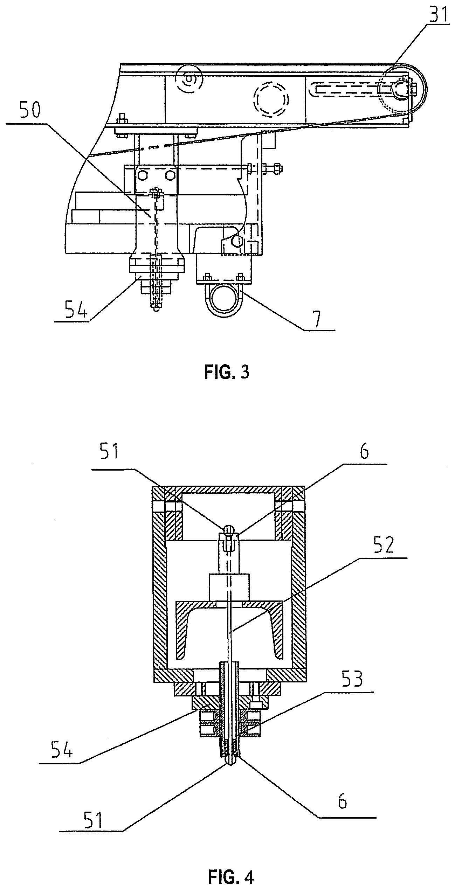

As shown in the FIG.1, FIG. 2, FIG 3 and FIG 4, reference numerals representations are as follows: the sensing device 1, the induction device 2, the main transmission device 30, the main driven roller 32, the weighing device 40, the main frame 41, the truss 42, the suspension mechanism 50, the ball-shaped component 51, the metal pulling cord 52, the regulatory wire thread insert 53, the adjusting device 54, the concave bracket 6, the U-shaped bracket 7 and the support leg 8.

### Detailed Embodiment of the Invention:

### Embodiment 1:

As shown in the FIG1, FIG2, FIG3 and FIG4, the method for check weighing materials is described as follows.

As being transferred, proportioned materials which have been weighed are driven by the main transmission device 30 to move forward. When the induction device 2 which is at least mounted on one side of the weighing device 40 detects the materials, the main transmission device 30 stops rotating and the materials exert a downward vertical force due to gravity on the weighing device 40.

Meanwhile, the vertical force exerted by the materials is transferred to the ball-shaped components 51 which are positioned at one end of the suspension mechanism 50 and connected with the concave brackets 6 through rigid parts. The deformation of the sensing device 1 occurs due to the downward force passing by the suspension mechanism 50 so as to weigh materials. Comparing the weight readings of the materials which have been proportioned with the check weighing readings, the process of check weighing of materials is completed.

One end of the sensing device 1 is fixedly connected with the truss 42 and the other end of the sensing device 1 is connected with the main frame 41 of the weighing device 40, so as to lower the impact caused by external environment on the accuracy of the weighing device.

Both ends of the suspension mechanism 50 are respectively fixedly connected with the sensing device 1 and the concave brackets 6 on the weighing device 40 through the ball-shaped components 51 of the suspension mechanism 50 in an engaged manner and the contact area between each ball-shaped component 51 and concave bracket 6 is equal or less than half of the surface area of the ball-shaped component 51, so as to realize the accurate weighing of materials.

In order to achieve the above-identified objectives, the check weighing device utilized mainly comprises:
the main transmission device 30, which includes the main driven roller 31 and a driving motor which is arranged inside the main driven roller 31 and used for driving convey belts to move in a cyclic manner;
the weighing device 40, which includes the main frame 41 made of aluminum for reducing the self weight of the check weighing device and the truss 42 used for bearing vertical pulling forces or stresses caused by loads;
the suspension mechanism 50, which includes the ball-shaped components 51 respectively connected with one end of the weighing device 40 and one end of the sensing device 1, and metal pulling cords connected with the ball-shaped components 51, which are made of steel wire.

The main transmission device 30 which is used for driving materials to move forward is mounted at a lateral end of the main frame 41 of the weighing device 40, and the induction device 2 which is used for detecting the position of materials is fixedly arranged on at least one side of the main frame 41 of the weighing device 40.

One or more groups of the sensing devices 1 are fixedly arranged under the main frame 41 of the weighing device 40. One end of the sensing device 1 is connected with the main frame 41 of the weighing device 40 through the suspension mechanism 50. The concave bracket 6 of the suspension mechanism 50 is vertically inserted into the regulatory wire thread insert 53 and the adjusting device 54 which is used for preventing the metal pulling cords 52 from deviating from orthocenter is vertically connected outside the regulatory wire thread insert 53 in a sleeved manner, so as to ensure the metal pulling cords 52 keeping vertically. The truss 42 of the weighing device 40 is respectively connected with the support legs 8 through U-shaped bracket 7, so as to ensure accurate check weighing of materials.

## Claims

1. A method for check weighing of materials, which determines, by a check weighing device, the weight of materials which have been proportioned and weighed before being processed by internal mixers,
wherein the check weighing device comprises:
a main transmission device (30) for driving materials to move;
a weighing device (40) for weighing materials;
an induction device (2) for detecting materials which is at least fixed on one side of the weighing device (40);
a sensing device (1); and
a suspension mechanism (50) which is connected with the sensing device (1) and the weighing device (40), the suspension mechanism (50) comprising ball-shaped components (51) arranged at ends of the suspension mechanism (50) and connected with concave brackets (6), metal pulling cords (52) connected with the ball-shaped components (51), and an adjusting device (54),
wherein both ends of the suspension mechanism (50) are respectively fixedly connected with the sensing device (1) and the concave brackets (6) on the weighing device (40) through the ball-shaped components (51) at the suspension mechanism (50) in an engaged manner,
wherein the sensing device (1) is configured to physically deform under the action of the downward force exerted by the suspension mechanism (50),
wherein the method comprises the steps of:
driving the materials to move forward using the main transmission device (30);
detecting the materials using the induction device (2);
stopping the rotation of the main transmission device (30), the materials exerting a vertical downward force due to gravity on the weighing device (40), said vertical force being transferred to the ball-shaped components (51) through rigid parts of the weighing device (40);
determining the weight of materials based on the deformation of the sensing device (1);
comparing the weighing readings of check weighing with the prior weighing readings of materials which have been proportioned; and
upon completion of said comparison, driving the materials using the main transmission device (30) to move forward, so as to complete check weighing of the materials.

2. The method for check weighing of materials according to claim 1, wherein one end of the sensing device (1) is fixedly connected with a truss (42) and the other end of the sensing device (1) is connected with a main frame (41) of the weighing device (40).

3. The method for check weighing of materials according to claim 1 or claim 2, wherein the contact area between each ball-shaped component (51) and concave bracket (6) is equal or less than half of the surface area of the ball-shaped components (51).

4. A check weighing device, comprising:
a main transmission device (30) for driving materials to move, the main transmission device (30) comprising a main driven roller (31) and a driving motor which is arranged inside the main driven roller (31) and configured to drive convey belts to move in a cyclic manner;
a weighing device (40) for weighing materials, the weighing device (40) comprising a main frame (41) made of aluminum for reducing the self weight of the check weighing device and a truss (42) used for bearing vertical pulling forces or stresses caused by loads,
the check weighing device being **characterized in that** it comprises:
an induction device (2) for detecting materials;
a sensing device (1); and
a suspension mechanism (50) comprising ball-shaped components (51) respectively connected with one end of the weighing device (40) and one end of the sensing device (1) and connected with concave brackets (6), metal pulling cords (52) connected with the ball-shaped components (51), and an adjusting device (54),
wherein both ends of the suspension mechanism (50) are respectively fixedly connected with the sensing device (1) and the concave brackets (6) on the weighing device (40) through the ball-shaped components (51) at the suspension mechanism (50) in an engaged manner, and
wherein the sensing device (1) is configured to physically deform under the action of a vertical downward force due to gravity which is exerted by the materials on the weighing device (40) and which is transferred to the ball-shaped components (51) through rigid parts of the weighing device (40).

5. The check weighing device according to claim 4, wherein:
the main transmission device (30) which is used for driving materials to move forward is mounted at a lateral end of the main frame (41) of the weighing device (40), and
the induction device (2) which is used for detecting the position of materials is fixedly arranged on at least one side of the main frame (41) of the weighing device (40);
one or more groups of the sensing devices (1) are fixedly arranged below the main frame (41) of the weighing device (40), and one end of the sensing device (1) is connected with the main frame (41) of the weighing device (40) through the suspension mechanism (50).

6. The check weighing device according to claim 4 or claim 5, wherein the concave brackets (6) are vertically inserted into a regulatory wire thread insert (53), and wherein the adjusting device (54) for preventing the metal pulling cords (52) from deviating from orthocenter is vertically connected outside the regulatory wire thread insert (53) in a sleeved manner.

7. The check weighing device according to claim 6, wherein the truss (42) is respectively connected with support legs (8) through U-shaped brackets (7).

## Patentansprüche

1. Verfahren zum Kontrollwiegen von Materialien, das durch eine Kontrollwiegevorrichtung das Gewicht von Materialien bestimmt, die proportioniert und gewogen wurden, bevor sie durch Innenmischer verarbeitet werden,
wobei die Kontrollwiegevorrichtung umfasst:
eine Hauptübertragungsvorrichtung (30), um Materialien dazu zu bringen, sich zu bewegen,
eine Wiegevorrichtung (40) zum Wiegen von Materialien,
eine an wenigstens einer Seite der Wiegevorrichtung (40) befestigte Induktionsvorrichtung (2) zum Nachweisen von Materialien,
eine Erfassungsvorrichtung (1) und
einen Aufhängemechanismus (50), der mit der Erfassungsvorrichtung (1) und der Wiegevorrichtung (40) verbunden ist, wobei der Aufhängemechanismus (50) kugelförmige Komponenten (51), die an Enden des Aufhängemechanismus (50) angeordnet und mit konkaven Klammern (6) verbunden sind, Metallzugschnüre (52), die mit den kugelförmigen Komponenten (51) verbunden sind, und eine Einstellvorrichtung (54) umfasst,
wobei beide Enden des Aufhängemechanismus (50) jeweils fest mit der Erfassungsvorrichtung (1) und den konkaven Klammern (6) auf der Wiegevorrichtung (40) durch die kugelförmigen Komponenten (51) an dem Aufhängemechanismus (50) in Eingriff stehend verbunden sind,
wobei die Erfassungsvorrichtung (1) dazu ausgestaltet ist, sich unter der Wirkung der durch den Aufhängemechanismus (50) ausgeübten, nach unten gerichteten Kraft physisch zu verformen, wobei das Verfahren die Schritte umfasst des:
Antreibens der Materialien, sich unter Verwendung der Hauptübertragungsvorrichtung (30) vorwärts zu bewegen,
Nachweisens der Materialien unter Verwendung der Induktionsvorrichtung (2),
Stoppens der Drehung der Hauptübertragungsvorrichtung (30), wobei die Materialien aufgrund der Schwerkraft eine vertikale, nach unten gerichtete Kraft auf die Wiegevorrichtung (40) ausüben, wobei die vertikale Kraft durch starre Teile der Wiegevorrichtung (40) auf die kugelförmigen Komponenten (51) übertragen wird,
Bestimmens des Gewichts von Materialien basierend auf der Verformung der Erfassungsvorrichtung (1),
Vergleichens der Wiegeablesungen der Kontrollwägung mit den vorherigen Wiegeablesungen von Materialien, die proportioniert wurden, und
nach Abschluss des Vergleichs, Dazu-Bringens des Materials unter Verwendung der Hauptübertragungsvorrichtung (30), sich vorwärts zu bewegen, um das Kontrollwiegen der Materialien abzuschließen.

2. Verfahren zum Kontrollwiegen von Materialien nach Anspruch 1, wobei ein Ende der Erfassungsvorrichtung (1) fest mit einer Traverse (42) verbunden ist und das andere Ende der Erfassungsvorrichtung (1) mit einem Hauptrahmen (41) der Wiegevorrichtung (40) verbunden ist.

3. Verfahren zum Kontrollwiegen von Materialien nach Anspruch 1 oder Anspruch 2, wobei die Kontaktfläche zwischen jeder kugelförmigen Komponente (51) und konkaven Klammer (6) gleich der oder weniger als die Hälfte der Oberfläche der kugelförmigen Komponenten (51) ist.

4. Kontrollwiegevorrichtung, umfassend:
eine Hauptübertragungsvorrichtung (30), um Materialien dazu zu bringen, sich zu bewegen, wobei die Hauptübertragungsvorrichtung (30) eine angetriebene Hauptwalze (31) und einen Antriebsmotor umfasst, der innerhalb der angetriebenen Hauptwalze (31) angeordnet ist und dazu ausgestaltet ist, Förderbänder anzutreiben, sich zyklisch zu bewegen,
eine Wiegevorrichtung (40) zum Wiegen von Materialien, wobei die Wiegevorrichtung (40) einen Hauptrahmen (41), der zwecks Reduktion des Eigengewichts der Kontrollwiegevorrichtung aus Aluminium besteht, und eine Traverse (42) umfasst, die zum Tragen von vertikalen Zugkräften oder durch Lasten verursachten Belastungen verwendet wird,
wobei die Kontrollwiegevorrichtung **dadurch gekennzeichnet ist, dass** sie umfasst:
eine Induktionsvorrichtung (2) zum Nachweisen von Materialien,
eine Erfassungsvorrichtung (1) und
einen Aufhängemechanismus (50), der kugelförmige Komponenten (51), die jeweils mit einem Ende der Wiegevorrichtung (40) und einem Ende der Erfassungsvorrichtung (1) verbunden sind und mit konkaven Klammern (6) verbunden sind, Metallzugschnüre (52), die mit den kugelförmigen Komponenten (51) verbunden sind, und eine Einstellvorrichtung (54) umfasst,
wobei beide Enden des Aufhängemechanismus (50) jeweils fest mit der Erfassungsvorrichtung (1) und den konkaven Klammern (6) auf der Wiegevorrichtung (40) durch die kugelförmigen Komponenten (51) an dem Aufhängemechanismus (50) in Eingriff stehend verbunden sind, und
wobei die Erfassungsvorrichtung (1) dazu ausgestaltet ist, sich physisch zu verformen unter der Wirkung einer vertikalen, nach unten gerichteten Kraft aufgrund der Schwerkraft, die von den Materialien auf die Wiegevorrichtung (40) ausgeübt wird und die durch starre Teile der Wiegevorrichtung (40) auf die kugelförmigen Komponenten (51) übertragen wird.

5. Kontrollwiegevorrichtung nach Anspruch 4, wobei:
die Hauptübertragungsvorrichtung (30), die dazu verwendet wird, Materialien dazu zu bringen, sich vorwärts zu bewegen, verwendet wird, an einem seitlichen Ende des Hauptrahmens (41) der Wiegevorrichtung (40) angebracht ist, und
die Induktionsvorrichtung (2), die zum Nachweisen der Position von Materialien verwendet wird, an mindestens einer Seite des Hauptrahmens (41) der Wiegevorrichtung (40) fest angeordnet ist,
eine oder mehrere Gruppen der Erfassungsvorrichtungen (1) fest unterhalb des Hauptrahmens (41) der Wiegevorrichtung (40) angeordnet sind, und ein Ende der Erfassungsvorrichtung (1) mit dem Hauptrahmen (41) der Wiegevorrichtung (40) durch den Aufhängemechanismus (50) verbunden ist.

6. Kontrollwiegevorrichtung nach Anspruch 4 oder Anspruch 5, wobei die konkaven Klammern (6) vertikal in einen regulierenden Drahtgewindeeinsatz (53) eingesetzt sind und wobei die Einstellvorrichtung (54) zum Verhindern, dass die Metallzugschnüre (52) von dem Orthozentrum abweichen, außerhalb des regulierenden Drahtgewindeeinsatzes (53) hülsenartig vertikal verbunden ist.

7. Kontrollwiegevorrichtung nach Anspruch 6, wobei die Traverse (42) jeweils über U-förmige Klammern (7) mit Stützbeinen (8) verbunden ist.

## Revendications

1. Procédé pour effectuer un pesage de vérification de matériaux, qui détermine, grâce à un dispositif de pesage de vérification, le poids des matériaux qui ont été proportionnés et pesés avant leur traitement par des mélangeurs internes, dans lequel le dispositif de pesage de vérification comprend :
un dispositif de transmission principal (30) pour entraîner des matériaux à se déplacer ;
un dispositif de pesage (40) pour peser les matériaux ;
un dispositif d'induction (2) pour détecter les matériaux, qui est au moins fixé sur un côté du dispositif de pesage (40) ;
un dispositif de détection (1) ; et
un mécanisme de suspension (50) qui est raccordé avec le dispositif de détection (1) et le dispositif de pesage (40), le mécanisme de suspension (50) comprenant des composants en forme de boule (51) agencés aux extrémités du mécanisme de suspension (50) et raccordés avec des consoles concaves (6), des cordes de traction métalliques (52) raccordées avec les composants en forme de boule (51) et un dispositif d'ajustement (54),
dans lequel les deux extrémités du mécanisme de suspension (50) sont raccordées de manière respectivement fixe avec le dispositif de détection (1) et les consoles concaves (6) sur le dispositif de pesage (40) par le biais des composants en forme de boule (51) au niveau du mécanisme de suspension (50) par mise en prise,
dans lequel le dispositif de détection (1) est configuré pour se déformer physiquement sous l'action de la force descendante exercée par le mécanisme de suspension (50),
dans lequel le procédé comprend les étapes suivantes :
entraîner les matériaux à se déplacer vers l'avant à l'aide du dispositif de transmission principal (30) ;
détecter les matériaux à l'aide du dispositif d'induction (2) ;
arrêter la rotation du dispositif de transmission principal (30), les matériaux exerçant une force descendante verticale due à la gravité sur le dispositif de pesage (40), ladite force verticale étant transférée aux composants en forme de boule (51) par le biais de parties rigides du dispositif de pesage (40) ;
déterminer le poids des matériaux en fonction de la déformation du dispositif de détection (1) ;
comparer les lectures de pesage du pesage de vérification avec les lectures de pesage antérieures des matériaux qui ont été proportionnés ; et
suite à l'achèvement de ladite comparaison, entraîner les matériaux à l'aide du dispositif de transmission principal (30) à se déplacer vers l'avant, afin de terminer le pesage de vérification des matériaux.

2. Procédé pour effectuer un pesage de vérification de matériaux selon la revendication 1, dans lequel une extrémité du dispositif de détection (1) est raccordée de manière fixe avec une poutre (42) et l'autre extrémité du dispositif de détection (1) est raccordée avec un bâti principal (41) du dispositif de pesage (40).

3. Procédé pour effectuer un pesage de vérification de matériaux selon la revendication 1 ou la revendication 2, dans lequel la zone de contact entre chaque composant en forme de boule (51) et la console concave (6) est égale ou inférieure à la moitié de la surface des composants en forme de boule (51).

4. Dispositif de pesage de vérification comprenant :
un dispositif de transmission principal (30) pour entraîner des matériaux à se déplacer, le dispositif de transmission principal (30) comprenant un rouleau entraîné principal (31) et un moteur d'entraînement qui est agencé à l'intérieur du rouleau entraîné principal (31) et configuré pour entraîner des courroies de transport pour qu'elles se déplacent d'une manière cyclique ;
un dispositif de pesage (40) pour peser les matériaux, le dispositif de pesage (40) comprenant un bâti principal (41) réalisé à partir d'aluminium pour réduire le poids propre du dispositif de pesage de vérification et une poutre (42) utilisée pour supporter les forces de traction verticales ou les contraintes provoquées par les charges,
le dispositif de pesage de vérification étant **caractérisé en ce qu'**il comprend :
un dispositif d'induction (2) pour détecter des matériaux ;
un dispositif de détection (1) ; et
un mécanisme de suspension (50) comprenant des composants en forme de boule (51) respectivement raccordés avec une extrémité du dispositif de pesage (40) et une extrémité du dispositif de détection (1) et raccordés avec des consoles concaves (6), des cordes de traction métalliques (52) raccordées avec les composants en forme de boule (51) et un dispositif d'ajustement (54),
dans lequel les deux extrémités du mécanisme de suspension (50) sont raccordées de manière respectivement fixe avec le dispositif de détection (1) et les consoles concaves (6) sur le dispositif de pesage (40) par le biais des composants en forme de boule (51) au niveau du mécanisme de suspension (50) par mise en prise, et
dans lequel le dispositif de détection (1) est configuré pour se déformer physiquement sous l'action d'une force descendante verticale due à la gravité qui est exercée par les matériaux sur le dispositif de pesage (40) et qui est transférée aux composants en forme de boule (51) par le biais des parties rigides du dispositif de pesage (40).

5. Dispositif de pesage de vérification selon la revendication 4, dans lequel :
le dispositif de transmission principal (30) qui est utilisé pour entraîner les matériaux à se déplacer vers l'avant, et monté au niveau d'une extrémité latérale du bâti principal (41) du dispositif de pesage (40), et
le dispositif d'induction (2) qui est utilisé pour détecter la position des matériaux est agencé de manière fixe sur au moins un côté du bâti principal (41) du dispositif de pesage (40) ;
un ou plusieurs groupes de dispositifs de détection (1) sont agencés de manière fixe au-dessous du bâti principal (41) du dispositif de pesage (40), et une extrémité du dispositif de détection (1) est raccordé avec le bâti principal (41) du dispositif de pesage (40) par le biais du mécanisme de suspension (50).

6. Dispositif de pesage de vérification selon la revendication 4 ou la revendication 5, dans lequel les consoles concaves (6) sont verticalement insérées dans un insert à filetage métallique réglementaire (53) et dans lequel le dispositif d'ajustement (54) pour empêcher les cordes de traction métalliques (52) de dévier du centre orthogonal, est verticalement raccordé à l'extérieur de l'insert à filetage métallique réglementaire (53) par manchon.

7. Dispositif de pesage de vérification selon la revendication 6, dans lequel la poutre (42) est respectivement raccordée avec des pattes de support (8) par le biais de consoles en forme de U (7).
